Europäisches Patentamt

European Patent Office

Office européen des brevets

(11) Publication number: **0 074 632**
**B1**

# EUROPEAN PATENT SPECIFICATION

(45) Date of publication of patent specification: **24.02.88**

(21) Application number: **82108342.5**

(22) Date of filing: **09.09.82**

(51) Int. Cl.⁴: **C 08 L 81/02, C 08 K 5/54**

(54) Glass-filled polyarylene sulfide compositions containing organosilanes.

(30) Priority: **10.09.81 US 300859**

(43) Date of publication of application:
**23.03.83 Bulletin 83/12**

(45) Publication of the grant of the patent:
**24.02.88 Bulletin 88/08**

(84) Designated Contracting States:
**AT BE CH DE FR GB IT LI LU NL SE**

(56) References cited:
**US-A-4 284 549**

**Patent Abstracts of Japan, vol. 4, no.61, 8 May 1980, p.130C9, JP-A-55 29526**

**Patent Abstracts of Japan, vol. 1, no. 91, 24 August 1977, p. 1991C77, JP-A-52 52958**

**Patent Abstracts of Japan, vol. 6, no. 149, 10 August 1982, JP-A-57 70157**

(73) Proprietor: **PHILLIPS PETROLEUM COMPANY**
**5th and Keeler**
**Bartlesville Oklahoma 74004 (US)**

(72) Inventor: **Blackwell, Jennings Price**
**3509 Sheridan Road**
**Bartlesville Oklahoma 74003 (US)**

(74) Representative: **Dost, Wolfgang, Dr.rer.nat., Dipl.-Chem. et al**
**Patent- und Rechtsanwälte Bardehle-Pagenberg-Dost-Altenburg & Partner Postfach 86 06 20**
**D-8000 München 86 (DE)**

(56) References cited:
**AMERICAN CHEMICAL SOCIETY. DIVISION OF ORGANIC COATINGS AND PLASTICS CHEMISTRY, vol. 40, 1979 B.C. ARKLES et al. "The effect of silanes on adhesion of size free glass fibers in thermoplastic composites", pages 538-541**

**Description**

This invention relates to certain organosilane-containing glass-filled polyarylene sulfide compositions. This invention also relates to a method for modifying properties of glass-filled polyarylene sulfide compositions by adding certain organosilanes to the compositions. More particularly this invention relates to methods for increasing and decreasing the flow rate of a glass-filled polyarylene sulfide and for improving the hydrolytic stability of a glass-filled polyarylene sulfide.

US Patent 4,176,098 (Needham) discloses organosilanes in glass-filled polyarylene sulfide compositions. The Needham patent teaches that small quantities (0.5 to 5 weight percent of the total composition) of silanes can be added to an arc resistant composition to improve its water resistance and linear coefficient of expansion. The arc resistant composition is produced by incorporating glass and other fillers and a substantial amount of clay or talc into a polyarylene sulfide. Needham states that "...it is believed that any silane can be utilized to impart improved water resistance and linear coefficient of expansion to the new arc resistant composition, presently preferred are the alkylsilanes, alkoxysilanes, and polymers thereof." Despite this broad laugauge only a few specific silanes such as γ-glycidoxypropyltrimethoxysilane, methyltrimethoxysilane, and methylmethoxysilane are recited by Needham. The utility of certain organosilanes to increase or decrease the flow rate of glass-filled polyarylene sulfide compositions is neither taught nor suggested.

In a preprint from the American Chemical Society Division of Organic Coatings and Plastics Chemistry 40, 538-41 (1979) the effect of silanes on adhesion of size free glass fibers in thermoplastic (including polyphenylene sulfide) composite is examined. The organosilane compounds of my invention, however, are not disclosed.

Japanese publication 55-29526 discloses a specific kind of silane, namely amino silanes. These amino silanes are described in conjunction with polyphenylene sulfide.

The Japanese publication 52-52958 describes polyphenylene sulfide with a specific mercaptosilane. The effect is alleged to be an improvement of the adhesiveness of glass fibers to the polyphenylene sulfide resin.

I have discovered that certain organosilanes may be used in glass-filled polyarylene sulfide compositions to improve hydrolytic stability and/or to effect a change of flow rate.

Accordingly, it is an object of my invention to provide new and useful poly(arylene sulfide) compositions.

A further object of my invention is to provide a method for modifying properties of glass-filled polyarylene sulfide compositions.

More particularly it is an object of my invention to provide methods for improving hydrolytic stability and increasing or decreasing flow rates of glass-filled polyarylene sulfide compositions.

These and other objects of my invention will become apparent from the disclosure and claims herein provided.

In accordance with this invention a new poly(arylene sulfide) composition is provided as it is defined in claim 1. Furthermore and in accordance with a further embodiment of this invention a method to modify glass-filled poly(arylene sulfide) is provided as it is defined in claim 2.

Further embodiments of this invention are defined in the dependent claims as well as in the following description.

Thus in accordance with this invention the following organosilanes are used:
1. Octadecyltriethoxysilane,
2. 2-(Benzylchloro)ethyltrimethoxysilane,
3. 3-Ureidopropyltrimethoxysilane,
4. N,N-Diethyltrimethoxysilylpropylthiosulfenamide,
5. n-Propyltriethoxysilane,
6. Trimethylsilylpropylazide,
7. bis(3-Triethoxysilylpropyl)tetrasulfide,
8. Phenyltrimethoxysilane,
9. tris(Trimethoxysiloxy)phenylsilane,
10. Octyltrichlorosilane.

Any uncured or partially cured polyarylene sulfide whether homopolymer, copolymer, terpolymer, and the like, or a blend of such polymers, can be used in the practice of any aspect of this invention. In this application an uncured or partially cured polymer is a polymer the molecular weight of which can be increased by either lengthening of a molecular chain or by cross-linking or by combination of both by supplying thereto sufficient energy, such as heat. A process which increases the molecular weight of the polymer shall be designated as a curing process. Particularly suited for use in this invention are those polyarylene sulfides having inherent viscosities in chloronaphthalene (0.2 gram polymer in 100 ml chloronapthalene) at 206°C (402.8°F) of at least about 0.08, preferably between about 0.1 and about 0.3, and more preferably between about 0.13 and 0.23. Examples of polymers which can be used in this invention are disclosed in U.S. Patent No. 3,354,129. Other examples of polyarylene sulfides are poly(4,4'-biphenylene sulfide); poly(2,4-tolylene sulfide); a copolymer from p-dichlorobenzene, 2,4-dichlorotoluene,

# 0 074 632

and sodium sulfide, and blends thereof. Of all of the polyarylene sulfides, polyphenylene sulfide (PPS) polymers are presently preferred for use with the invention.

Generally the amount of organosilane to be used should be in excess of about 0.2 weight percent based upon total composition. The currently preferred range is 0.2 to 2 weight percent. The scope of this invention, however, encompasses a much broader range and requires only that an amount sufficient to increase or decrease the flow or to improve the hydrolytic stability of the composition be used.

The amount of glass in the polyarylene sulfide should usually be at least about 10 weight percent based upon total composition. The currently preferred range is about 25 to about 60 weight percent.

In addition to glass, other fillers may be present in the polyarylene sulfide so long as these fillers do not adversely affect the composition.

The scope of this aspect of my invention encompasses both uncured and at least partially cured mixtures of a glass-filled polyarylene sulfide and at least one of the above-identified organosilane flow decreasing or curing agents. When cured at a temperature greater than or about equal to its melting point, the resultant composition exhibits a substantial flow retarded characteristic.

My invention also includes a method for curing and reducing the flow rate of glass-filled polyarylene sulfides by adding at least one of the above-identified organosilanes to a glass-filled polyarylene sulfide and curing the same at a temperature greater than or about equal to the melting point of the polyarylene sulfide.

Although all polyarylene sulfides are contemplated to be suitable in the practice of my invention, polyphenylene sulfide is currently preferred. In the case of polyphenylene sulfide the curing temperature should be in excess of about 288°C (550°F). The currently preferred curing temperature is about 316°C (600°F) but a wide temperature range is contemplated.

Curing may be accomplished by mixing a glass-filled polyarylene sulfide and at least one of the organosilane curing agents in a blender and extruding the mixture at a sufficiently high temperature to effect curing. This is the currently preferred method since it obviates the need for a separate curing step after the molding process.

I have found that by adding one of the above-identifed organosilane flow increasing agents to a glass-filled polyarylene sulfide and heating the same at a temperature greater than or about equal to the melting point of the polyarylene sulfide, the resultant composition exhibits an increased flow rate.

The scope of this aspect of my invention includes compositions of polyarylene sulfide and the above organosilanes both prior to and after heating.

Polyphenylene sulfide is currently preferred, but all polyarylene sulfides are contemplated to be suitable. In the case of polyphenylene sulfide the heating temperature should be in excess of about 288°C (550°F). The currently preferred heating temperature is about 316°C (600°F) but a wide temperature range is contemplated.

This aspect of my invention may be practiced by mixing a glass-filled polyarylene sulfide and at least one of the appropriate organosilanes in a blender and extruding the mixture at a temperature greater than or about equal to the melting point of the polyarylene sulfide. Preferably, the extrusion temperature is about 288°C (550°F).

Operability of the invention has been demonstrated through a series of laboratory experiments. In each run 0.8 weight percent of an organosilane was added to 40 weight percent glass-filled 60 weight percent polyphehylene sulfide. The polyphenylene sulfide used is known under the trademark Ryton® PR-06 (Phillips Petroleum Co.) and has a melt flow of 120±20 g/10 min. The mixture was stirred in a Welex blender and extruded at 316°C (600°F) through a Davis Standard extruder. After extrusion the blend was dried for 3 hours at 177°C (350°F) and then molded in a New Britain mold. The flow rate for each run was determined and appears in Table I.

TABLE I
0.8 Wt.% silane added to 40 Wt.% glass-filled polyphenylene sulfide

| Organosilane | Flow rate, g/10 mins. at 316°C (600°F) | |
| --- | --- | --- |
| | Without silane | With silane |
| 4. 2-(Benzylchloro)ethyl trimethoxysilane | 48 | 0 |
| | 37 | 0.1 |
| 2. 3-Ureidopropyltrimethoxysilane | 58 | 134 |

As evidenced by a corresponding decrease in flow rate the first organosilane facilitated curing of the glass-filled polyphenylene sulfide during the extruding process. Associated with the other organosilane was an increase in flow rate. The increased flow rate attributable to this latter organosilane appears to be due to depolymerization.

Table II displays the results when organosilane, successfully used as curing agents for glass-filled polyphenylene sulfide, are used with non-filled polyphenylene sulfide.

3

**0 074 632**

TABLE II
0.8 Wt.% silane added to polyphenylene sulfide

| Organosilane | Flow rate, g/10 mins. at 316°C (600°F) | |
|---|---|---|
| | Without silane | With silane |
| 4. 2-(Benzylchloro)ethyl trimethoxysilane | 519 | 476 |
| | 519 | 551 |

The absence of a decrease in flow rate indicates that the organosilanes are not useful as curing agents in non-filled polyphenylene sulfide. The presence of glass in the polyarylene sulfide is thought to be necessary for the successful practice of my invention. It is believed that the flow rate of the composition is decreased by a combination of two reactions: (1) the reaction between the silane portion of the silane molecule and the hydroxyl groups attached to the glass fiber surfaces resulting in a chemical bond; and (2) the reaction between the other end of the silane molecule and the polyarylene sulfide backbone to form another chemical bond. This chemical binding of glass fiber and polyarylene resin is believed to be, at least in part, responsible for the decrease in flow rate. This theory is offered only as a possible explanation and is not intended to further limit or define my invention.

I have also discovered that certain organosilanes when compounded into cured or partially cured glass-filled polyarylene sulfide compositions provide hydrolytic stability to the compositions.

It is noted that the organosilanes 4. and 6. as claimed contain a nitrogen atom in the form of an amido or azido group.

The following examples serve to identify the organosilanes which are useful for this aspect of my invention. The examples further serve to illustrate the operability of my invention.

Example I

This example describes the procedure used to prepare the samples and the subsequent testing. The method of preparation was generally as follows: 16 grams of a particular silane was added dropwise to 800 grams of 3.2 mm (.125 inch) milled glass fibers (Owen-Corning) in a Welex Blender after which the contents were placed in a fiber drum and tumbled along with 1200 grams of polyphenylene sulfide known under the trademark Ryton PR-06 (Phillips Petroleum Co.) having a melt flow of $120\pm20$ g/10 min. The mixture was extruded through a Davis Standard extruder at 600°F (316°C), dried in a 350°F (177°C) oven for 3 hours and molded using a New Britian molding machine (barrel 316°C (600°F) mold 135°C (275°F)) into bar specimens, 20 cm×2.5 cm×3.2 mm (8 inches×1 inch×.125 inch). The bars (generally 3 per set) were immersed in water in a pressure cooker at 120°C and 103 kPa (15 psig) for 150 hrs., cooled, dried in an oven for a few hours at 110°C, conditioned overnight at room temperature and evaluated. Tensile strength was determined in accordance with test method ASTM D 882-56T. These results, shown in the following tables, provide a good indication of hydrolytic stability. Percent loss of tensile strength values below about 15% are preferred but any value below that of the control (i.e. no silanes) is acceptable.

4

Effect of various organosilanes on the hydrolytic stability of PPS-glass compositions

| No. | Organosilane tradename[a] | Chemical identity | Tensile strength, MPa | | No. in claim 1 |
|---|---|---|---|---|---|
| | | | Initial | % Loss after 150 Hrs/120C 103kPa (15 psi) | |
| | | **TABLE III** | | | |
| 1 | —— | Control—no silane | 63.0 | 29.4 | |
| 2 | A-1160 | 3-Ureidopropyltrimethoxysilane | 62.7 | 11.4 | (3) |
| | | **TABLE IV** | | | |
| 3 | —— | Control—no silane | 44.9 | 40.5 | |
| 4 | T2902 | 2-(Benzylchloro)ethyltrimethoxysilane | 52.2 | 6.9 | (2) |
| | | **TABLE V** | | | |
| 5 | —— | Control—no silane | 65.5 | 25.8 | |
| 6 | Si-69 | Bis(3-triethoxysilylpropyl)tetrasulfide | 62.4 | 10.7 | (7) |
| 7 | —— | Trimethylsilylpropylazide | 76.6 | 8.1 | (6) |
| 8 | Silar 1249 | n-Propyltriethoxysilane | 57.4 | 5.9 | (5) |
| 9 | —— | N,N'-Diethyltrimethoxysilylpropyl-thiosulfenamide | 62.4 | 3.4 | (4) |
| | | **TABLE VI** | | | |
| 10 | —— | Control—no silane | 66.6 | 37.4 | |
| 11 | P09830 | Octyltrichlorosilane | 48.5 | 33.2 | (10) |
| 12 | T4250 | Tris(trimethoxysiloxy)phenylsilane | 60.0 | 23.8 | (9) |
| 13 | P0330 | Phenyltrimethoxysilane | 59.7 | 17.3 | (8) |
| 14 | P09775 | Octadecyltriethoxysilane | 39.1 | 1.8 | (1) |

[a] A series from Union Carbide T, P series from Petrarch Systems Inc. Silar from Degussa

Summary of Tables III, IV, V, and VI

For the convenience of comparison, the data in the preceding tables were normalized by averaging the five control runs from each table and proportionating each individual silane-containing composition value, in each table, relative to the control in each table and relative to the average control value. The values listed in Table VII are shown in descending value. Organosilanes associated with a normalized percent loss less than that of the control (i.e. 32.0) are the hydrolytic stabilizing agents of my invention.

TABLE VII
Summary of Tables III, IV, V and VI

| Reference No. | Table | Organosilane | Normalized % loss in tensile strength after 150 hrs/120C 103 kPa (15 psi) |
|---|---|---|---|
| 14 | VI | Octadecyltriethoxysilane | 1.5 |
| 9 | V | N,N'-Diethyltrimethoxysilylpropylthiosulfenamide | 4.2 |
| 4 | IV | 2-(Benzylchloro)ethyltrimethoxysilane | 5.5 |
| 8 | V | n-Propyltriethoxysilane | 7.3 |
| 7 | V | Trimethylsilylpropylazide | 10.0 |
| 2 | III | 3-Ureidopropyltrimethoxysilane | 12.4 |
| 6 | V | Bis(3-triethoxysilylpropyl)tetrasulfide | 13.2 |
| 13 | VI | Phenyltrimethoxysilane | 14.8 |
| 12 | VI | Tris(trimethoxysiloxy)phenylsilane | 28.4 |
| 11 | VI | Octyltrichlorosilane | 28.4 |
| ——————————————— Control—No silane ——————————————— | | | 32.0 |

**Claims**

1. A composition comprising a glass-filled polyarylene sulfide and at least one organosilane characterized in that said organosilane is selected from
    1. Octadecyltriethoxysilane,
    2. 2-(Benzylchloro)ethyltrimethoxysilane,
    3. 3-Ureidopropyltrimethoxysilane,
    4. N,N-Diethyltrimethoxysilylpropylthiosulfenamide,
    5. n-Propyltriethoxysilane,
    6. Trimethylsilylpropylazide,
    7. bis(3-Triethoxysilylpropyl)tetrasulfide,
    8. Phenyltrimethoxysilane,
    9. tris(Trimethoxysiloxy)phenylsilane,
    10. Octyltrichlorosilane.

2. A method for modifying a property of a glass-filled polyarylene sulfide characterized by
    (a) combining polyarylene sulfide, glass and an organosilane selected from at least one of the compounds recited in claim 1 to produce a mixture; and
    (b) raising the temperature of said mixture to a temperature equal to or above about the melting point of said polyarylene sulfide.

3. A method in accordance with claim 2 characterized in that said mixture is extruded at said temperature.

4. A composition or method in accordance with one of claims 1 to 3 characterized in that the weight percent, based upon total composition, of said organosilane is from 0.2 to 2.

5. A composition or method in accordance with one of claims 1 to 4 characterized in that said polyarylene sulfide is polyphenylene sulfide.

6. A method in accordance with claims 3 to 5 characterized in that said polyphenylene sulfide mixture is extruded at a temperature in excess of 288°C.

7. A composition produced by the method of one of claims 2 to 6.

**Patentansprüche**

1. Zusammensetzung, enthaltend ein glasverstärkes Polyarylensulfid und mindestens ein Organosilan, dadurch gekennzeichnet, daß das Organosilan ausgewählt ist aus
    1. Octadecyltriethoxysilan,
    2. 2-(Benzylchloro)ethyltrimethoxysilan,
    3. 3-Ureidopropyltrimethoxysilan,

6

4. N,N-Diethyltrimethoxysilylpropylthiosulfenamid
5. n-Propyltriethoxysilan,
6. Trimethylsilylpropylazid,
7. Bis(3-Triethoxysilylpropyl)tetrasulfid,
8. Phenyltrimethoxysilan,
9. Tris(Trimethoxysiloxy)phenylsilan,
10. Octyltrichlorosilan.

2. Verfahren zum Modifizieren einer Eigenschaft eines glasverstärkten Polyarylensulfids, dadurch gekennzeichnet, daß man

(a) Polyarylensulfid, Glas und ein Organosilan, ausgewählt aus mindestens einem der in Anspruch 1 wiedergegebenen Verbindungen zur Erzeugung eines Gemisches kombiniert; und

(b) die Temperatur des Gemisches auf eine Temperatur erhöht, die gleich ist dem Schmelzpunkt des Polyarylensulfids oder darüber liegt.

3. Verfahren gemäß Anspruch 2, dadurch gekennzeichnet, daß man das Gemisch bei dieser Temperatur extrudiert.

4. Zusammensetzung oder Verfahren nach einem der Ansprüche 1 bis 3, dadurch gekennzeichnet, daß der Gewichtsprozentsatz des Organosilans, bezogen auf die Gesamtzusammensetzung, im Bereich von 0,2 bis 2 liegt.

5. Verfahren oder Zusammensetzung nach einem der Ansprüche 1 bis 4, dadurch gekenzeichnet, daß das Polyarylensulfid Polyphenylsulfid ist.

6. Verfahren nach den Ansprüchen 3 bis 5, dadurch gekennzeichnet, daß man das Polyphenylensulfidgemisch bei einer Temperatur oberhalb von 288°C extrudiert.

7. Zusammensetzung, hergestellt nach dem Verfahren nach einem der Ansprüche 2 bis 6.

**Revendications**

1. Composition comprenant un poly(sulfure d'arylène) chargé de verre et au moins un organosilane, caractérisée en ce que cet organosilane est choisi parmi:
1. octadécyltriéthoxysilane,
2. 2-(benzylchloro)éthyltriméthoxysilane,
3. 3-uréidopropyltriméthoxysilane,
4. N,N-diéthyltriméthoxysilylpropylthiosulfénamide,
5. n-propyltriéthoxysilane,
6. Triméthylsilylpropylazide,
7. bis(3-triéthoxysilylpropyl)tétrasulfure,
8. Phényltriméthoxysilane,
9. tris(triméthoxysiloxy)phénylsilane,
10. Octyltrichlorosilane.

2. Procédé pour modifier une propriété d'un poly(sulfure d'arylène) chargé de verre, caractérisé en ce que

(a) on combine un poly(sulfure d'arylène), du verre et un organosilane choisi parmi au moins un des composés énumérés dans la revendication 1 pour produire un mélange; et

(b) on elève la température de ce mélange à une température égale ou supérieure aux environs du point de fusion de ce poly(sulfure d'arylène).

3. Procédé selon la revendication 2, caractérisé en ce que ce mélange est extrudé à cette température.

4. Composition ou procédé selon l'une quelconque des revendications 1 à 3, caractérisée en ce que le pourcentage pondéral par rapport à la composition totale de cet organosilane est de 0,2 à 2.

5. Composition ou procédé selon l'une quelconque des revendications 1 à 4, caractérisée en ce que ce poly(sulfure d'arylène) est du poly(sulfure de phénylène).

6. Procédé selon les revendications 3 à 5, caractérisé en ce que ce mélange de poly(sulfure de phénylène) est extrudé à une température supérieure à 288°C.

7. Composition préparée par le procédé selon l'une des revendications 2 à 6.